Europäisches Patentamt

European Patent Office

Office européen des brevets

(19)

(11) EP 1 231 193 A1

(12) **EUROPEAN PATENT APPLICATION**

(43) Date of publication:
14.08.2002 Bulletin 2002/33

(51) Int Cl.⁷: **C04B 37/02**, F16B 11/00, B29C 65/00

(21) Application number: 01200444.6

(22) Date of filing: 08.02.2001

(84) Designated Contracting States:
AT BE CH CY DE DK ES FI FR GB GR IE IT LI LU MC NL PT SE TR
Designated Extension States:
AL LT LV MK RO SI

(71) Applicant: SCK.CEN
1160 Brussels (BE)

(72) Inventor: van Nieuwenhove, Rudi
3600 Genk (BE)

(74) Representative: Bird, William Edward
Bird Goen & Co.,
Vilvoordsebaan 92
3020 Winksele (BE)

(54) **A leak-tight junction for use in extreme environments, a method of making the same and devices using the same**

(57) The invention describes a leak-tight junction between a first material and a second, plastically deformable, material which junction stays leak-tight under temperatures, pressures and radiation levels experienced in a nuclear reactor. The junction comprises a graphite layer between the first and the second material pressed against each other by means of a high pressure forming operation with a force with adequate strength to form the junction. The graphite foil used between the first and the second material according to the present invention preferably is a pure graphite foil. Such leak-tight junctions between a first material and a second, plastically deformable, material, can be realised by depositing a graphite foil between a surface portion of the first material and a surface portion of the second material where the junction is to be made, and by thereafter deforming said second material against said first material at the location of the junction to be made, with a force having adequate strength to produce the junction. The step of deforming the second material and producing the junction may be done e.g. by means of a fast magnetic forming technique, or by means of an explosive compression technique.

Fig. 2

EP 1 231 193 A1

**Description**

**Technical field of the invention**

The present invention relates to a junction for use in high temperature environments and/or high radiation environments typically experienced in or around a nuclear reactor, in particular in the cooling system, as well as a method of making the same, and devices using the same.

The leak-tight junctions may be used in measuring devices, e.g. probes, sensors, measuring electrodes, reference electrodes, leak-tight feedthroughs or similar. The present invention is particularly useful when the probe, sensor, electrode or feedthrough is in the core of a nuclear reactor and/or in contact with the cooling fluid of the nuclear reactor, e.g. in boiling water reactors (BWR), in pressurised water reactors (PWR) or in gas cooled reactors, however may also find advantageous application in other environments.

**Background of the invention**

Due to the increasing age of nuclear power plants, stainless steel core components suffer from increasing radiation damage. These irradiated stainless steels are susceptible to stress corrosion cracking, in this case called Irradiation Assisted Stress Corrosion Cracking (IASCC). To investigate this type of corrosion there is a need to develop a variety of electrochemical sensors (reference electrodes, pH, water conductivity, electrical feedthroughs, etc.) which can survive the harsh reactor environment (high temperature, high pressure, gamma and neutron radiation). These probes, sensors, measuring or reference electrodes or feedthroughs are particularly required to penetrate into the flow of cooling liquid. Any such devices should preferably not introduce any materials into the cooling flow which can migrate to other parts of the system causing operative disturbances or corrosion of components nor should these devices leak to a non-protected environment any cooling liquid which can be radioactive. Particularly difficult is the design of safe and long-lasting probes, sensors, measuring or reference electrodes or feedthroughs which are in contact with the liquid cooling medium in the vicinity of the reactor core. Such devices can experience high temperatures (e.g. 285 to 300°C), high pressures (e.g. 155 bar) and high radiation levels (e.g. $10^9$ Rads per hour gamma radiation and $10^{15}$ neutrons/cm$^2$.sec). They can as well be in contact with the cooling water which is not only a coolant but may also be a moderator for the reactor. Typical cooling water additives are boron or lithium which can corrode or dissolve potentially useful materials such as aluminium oxide.

The construction of these electrochemical sensors often requires a leak-tight sealing between a ceramic and a metal. Also for electrochemical noise measurements and online crack growth measurements, electrical feedthroughs with ceramic-metal transitions are needed.

Commercially available feedthroughs use alumina ($Al_2O_3$) as insulating materials. For Pressurised Water Reactor (PWR) conditions these feedthroughs can not be used long term because the $Al_2O_3$ dissolves rapidly in this water environment (300°C, 150 bar, additions of boron and lithium, etc.). The only known ceramic which does not dissolve or degrade in PWR conditions is zirconium oxide, such as zirconia, and Mg stabilised $ZrO_2$ in particular. The reason that there are (almost) no commercially available feedthroughs based on this ceramic is because it is extremely difficult to make a junction between this ceramic and a metal in a leak-tight way.

WO 99/62071 describes a device comprising a reliable, mechanically strong seal between a metal oxide ceramic and a metal material, and a method for obtaining same. The seal can withstand temperatures up to 350°C and pressures up to 200 bar and high radiation levels, and resists corrosion even in cooling water of a nuclear reactor containing lithium or boron. The seal is obtained by brazing a ceramic insulator to a metal component with a brazing powder substantially free of elements which are not resistant to transmutation in high thermal neutron radiation environments. The brazing procedure is carried out in an oven under vacuum. The assembled components are brought up to a temperature of 1000°C, and cooled down again, which can introduce stresses in the materials and diminish electrical connections. However, it is difficult to obtain repeatable results.

From US-3,674,586 it is known to produce a metal-to-ceramic junction on a portion of the surface of a cylindrical ceramic body. An adhesive layer is deposited on that portion and a tube comprising the metal of the junction is fitted around the ceramic body at the location of the adhesive layer. The combination of ceramic body, adhesive layer and metal tube is inserted into the interior of an inductive work coil of a magnetic forming apparatus. A burst of electromagnetic energy created by a brief high frequency discharge of high voltage electric energy in the work coil produces a pressure to deform the metal tube against the ceramic body at the junction surface portion with a high force and at a high speed to produce the metal-to-ceramic junction. A disadvantage of the metal-to-ceramic junction described is that it will not resist high temperatures and radiation.

There is a need for a reliable, mechanically strong seal between a metal oxide ceramic, especially zirconium oxide, in particular, or partly or completely stabilised zirconium oxide, and a metal which has a thermal expansion coefficient similar to that of the ceramic; and which has a longer life than conventional seals, as well as a method of making same. Preferably, the seal should withstand temperatures up to 350°C, pressures up to 200 bar as well as high radiation levels and resist corrosion even in cooling water of a nuclear reactor containing lithium or boron.

It is an object of the present invention to provide a leak-tight junction between a first material and a second material, which stays leak-tight at temperatures up to 350°C, and a method of making the seal for a probe, a sensor, a measuring electrode, a reference electrode or a feedthrough which meets the above requirements.

It is also an object of he present invention to provide an improved probe, sensor, measuring electrode, reference electrode, or feedthrough for environments with high thermal neutron radiation levels.

**Summary of the invention**

According to the present invention, a leak-tight junction is provided between a first material and a second, plastically deformable, material which junction preferably stays leak-tight at temperatures up to 350°C, the junction comprising a graphite layer sealingly compressed between the first and the second material. The compression force between the first and second materials should be a force having adequate strength for forming the sealed junction. Preferably, the first material, the graphite layer and the second material are concentric with each other. Preferably, the force to press the first and second materials together is a radial, preferably uniform force so as to produce wrinkle-free layers. The second material is plastically deformed to create the compression seal. The compression is gas and liquid tight.

The present invention also provides a method for producing a junction between a first material and a second, plastically deformable, material which junction is preferably leak-tight at temperatures up to 350°C, comprising the steps of:

> applying a graphite layer between a surface portion of the first material and a surface portion of the second material where the junction is to be made, and
> plastically deforming said second material against said first material at the location of the junction to be made by means of a high pressure forming operation. The compression force should be of adequate strength to produce a sealed junction between the first material and the second material using the graphite layer as a sealant.

The first material may be a ceramic material such as zirconium oxide, e.g. zirconium oxide, zircon, zirconia, or stabilised or partly-stabilised zirconium oxide. The ceramic material is preferably substantially resistant to transmutation at high thermal neutron radiation levels and preferably has a low cross-section with respect to neutrons. The ceramic material is additionally or alternatively preferably not attacked by cooling fluids used in nuclear reactors containing typical moderators such as boron or lithium.

The first material may also be a metal material, preferably having corrosion resistance. Metals such as zirconium, a zirconium alloy (e.g. Zircalloy), niobium or a niobium alloy, platinum, nickel or a nickel alloy, or stainless steel may be suitable. For nuclear applications the first material is preferably substantially resistant to transmutation at high thermal neutron radiation levels and preferably has a low cross-section to neutrons.

The second material preferably is a metal material. Metals such as for example nickel, or a nickel alloy, platinum, niobium or a niobium alloy, zirconium or a zirconium alloy (such as Zircalloy) or stainless steel may be suitable for the second material. For nuclear applications, the metal of the second material is preferably substantially resistant to transmutation at high thermal neutron radiation levels and preferably has a low cross-section to neutrons.

In accordance with the present invention, the term "resistance to high levels of thermal neutron radiation" means that the materials used in the construction of the leak-tight junction in accordance with the present invention should not transmute to a significant degree in the thermal neutron levels encountered in the primary or secondary cooling system of a nuclear reactor as well as in the core of such a reactor such that elements are produced which can lead to mechanical failure of the device (e.g. by embrittlement) or may be leached into the cooling system by dissolving or by forming an electrochemical couple with any other materials. This particularly applies to those materials which are directly in contact with the cooling fluid. It is anticipated that suitable materials will have a thermal neutron cross-section of less than 20 barn and preferably less than 11 barn. In particular elements which form a long disintegration series are not preferred.

Preferably the first material and the second material have the same or comparable coefficients of thermal expansion.

Preferably, the graphite layer is provided by a graphite foil which can be applied by wrapping around the first material. The graphite foil is used between the first and the second material according to the present invention as a sealant. The foil is preferably a pure graphite foil, e.g. a pure graphite foil which is thin and flexible with no binder or fibre reinforcement. It is commercially available in a range of thicknesses from 0.1 mm to 1.5 mm from Goodfellow, Cambridge UK. Preferably, the graphite foil has a purity of 98% or above. With a purity grade of 98% purity; up to 2% ash is included. For specialised applications graphite foil with a purity grade between 99.5% and 99.9% is available.

Preferably the graphite foil used has an atomic number of 6, an atomic weight of 12.011 amu, a melting point of 3650°C, a boiling point of 5000°C, a thickness of 0.1 mm, a purity grade of 99.8%, and a density (at 20°C) of 2.25 g/cm$^3$.

According to the present invention, such leak-tight junctions between a first material and a second, plastically deformable, material, which junctions are leak-tight at temperatures up to 350°C, can be realised by, in a first step, applying a graphite foil between a surface portion of the first material and a surface portion of the second material where the junction is to be made, and by, in a second step, deforming said second material against said first material at the location of the junction to be made, by means of a high pressure forming operation with a force having adequate strength and speed to produce a sealed junction.

The step of deforming the second material and producing the junction may be done e.g. by means of a fast magnetic forming technique, or by means of an explosive compression technique (a hydrospark forming operation).

During a magnetic forming operation, a large current discharge is directed through a coil. The coil is placed inside or around a sheet of metal to be transformed. The sheet of metal may have the form of a tube. The discharging current through the coil creates a magnetic field, and in the nearby sheet of metal an opposing magnetic field is induced. The result is that the two magnetic fields oppose and that a force moves the sheet away from the coil. Over a period of time the sheet of metal is deformed, often to the shape of a mandrel or other form. With the magnetic forming operation, pressures exceeding 1000 kPa/cm$^2$ and forming speeds greater than 100 m/s can be achieved.

Explosive forming or hydrospark converts electrical energy stored in a capacitor bank into hydraulic pressure. Utilising explosive forming, parts can be formed from either a tube or a flat sheet. A work piece is loaded between a form die and a work chamber. The work chamber is filled with water and a pair of electrodes is inserted into it. A capacitor bank is discharged through the electrodes and an interconnecting initiating filament. The water divides into $H_2$, which explodes, and $O_2$, which supports the combustion. This produces an expanding plasma channel and a high intensity shock wave, which combine to force the work piece to move outward against the die and take over the form of the die.

The obtained sealing, with the graphite foil between the two materials joined, can withstand high temperatures (up to 350°C), high pressures (up to 200 bar) and high radiation (neutron and gamma) levels, and therefore have a long life. The term "high radiation level" means in accordance with the present invention a total fluence of at least $10^{21}$ neutrons/cm$^2$. Neutron fluence is the product of the neutron flux and the exposure time, i.e. the total number of thermal neutrons which penetrate 1 cm$^2$, and is the relevant factor as it determines the amount of transmuted elements present in the device after irradiation. Typically the thermal neutron flux in a nuclear reactor will be $10^{13}$ neutrons/cm$^2$/sec or greater.

Other features and advantages of the present invention will become apparent from the following detailed description, taken in conjunction with the accompanying drawings, which illustrate, by way of example, the principles of the invention.

**Brief description of the drawings**

Fig. 1 is a schematic drawing of a set-up to compress a nickel tube around a $ZrO_2$ tube by means of magnetic forming according to an embodiment of the present invention.

Fig. 2 is a graph of recorded currents in function of time in the magnetic coil of a magnetic forming device for the case without and with work piece introduced inside the magnetic coil.

Fig. 3 is a schematic drawing of a vertical cross-section of a complete electrical feedthrough according to an embodiment of the present invention.

Fig. 4 is a symbol circuit diagram illustrating an equivalent electrical circuit of the magnetic forming process, this diagram being used to explain the theory of one forming process used according to the present invention.

Fig. 5 is a graph of the calculated currents in function of time, I1 being the current in external coil L1 of the magnetic forming apparatus as symbolically represented in Fig. 4, and I2 being the current in the work piece to be deformed.

Fig. 6 is a graph of the calculated pressures in the set-up of Fig. 1, P1 being the pressure induced on the driver tube 6 by the discharge current through the magnetic coil 4, P2 being the pressure generated in the driver tube by the hoop force and Pt being the total pressure exerted by the driver tube 6 onto the metal tube 1, in function of time.

**Description of the illustrative embodiments**

The present invention will be described with reference to certain embodiments and with reference to certain drawings but the invention is not limited thereto but only by the claims. In particular, the present invention may find general application in joining a ceramic part to a metal part, or in joining two metal parts together. As an example the formation of the seal is obtained by magnetic forming, but other forming methods, such as explosive forming for example, which have a force with an adequate strength and speed to obtain the junction, can also be used. The leak-tight junction described may be used for a wide variety of uses, especially in extreme conditions, e.g. of temperature, pressure and corrosive potential.

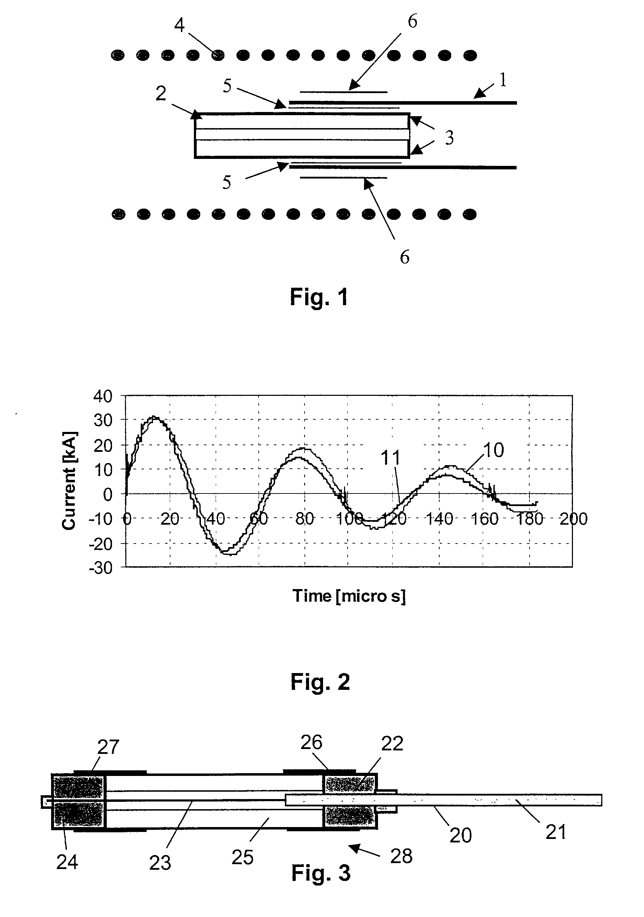

A schematic configuration of a set-up to obtain a leak-tight sealing between a metal tube 1 and a ceramic tube 2 by means of magnetic forming is shown in Fig. 1. The ceramic object is a tube by way of example only, it could as well have been a rod or a plate, or it could have had any other suitable form.

As mentioned above, of ceramic materials, only zirconium oxide is sufficiently stable with respect to corrosion that it does not dissolve significantly in PWR cooling water. Of the various types of zirconium oxide available, magnesium stabilised or partly stabilised zirconium oxide $ZrO_2$ (Mg) is found to be more stable in a high temperature water environment than yttrium (Y) stabilised zirconium oxide. Mg stabilised zirconium oxide has the additional advantage that it is mechanically stronger than the Y stabilised zirconium oxide, so that it can also resist the high impact force during the magnetic forming process better. Therefore, according to the present invention, the ceramic tube 2 is preferably made of Mg stabilised zirconium oxide $ZrO_2$ (Mg). The edges 3 of the zirconium oxide tube 2 are preferably rounded off (e.g. by polishing) to avoid fracturing at this location during the magnetic forming process.

As the seal between the metal tube 1 and the ceramic tube 2 has to remain intact between room temperature and 350 °C, it is important that the metal material of the metal tube 1 has a similar expansion coefficient to that of the ceramic of the ceramic tube 2. In addition, the metal material should have a low neutron cross section (to avoid transmutation and degradation) and be corrosion resistant. Further, it should be sufficiently plastically deformable (low yield strength) because of the technique used. For example Platinum and Nickel (or a Nickel alloy such as Inconel which is more corrosion resistant) fulfil these requirements as well as niobium, zirconium and zirconium alloys such as Zircalloy .

According to the present invention, the junction between the metal tube 1 and the ceramic tube 2 is obtained, for instance, by magnetic forming. A magnetic fast forming device Model SMU1500 (of Puls Plasmatechnik GmbH, Dortmund) may for example be used for carrying out the method of the invention and for obtaining the leak-tight junctions according to the present invention. This device uses a capacitor bank (with a total capacitance of 90 µF) which can be charged up to a maximum voltage of 7 kV, resulting in an available energy of 2.2 kJ. The magnetic coil, through which the capacitor bank is discharged, has a coil length (L) of 38 mm with 20 turns (N) of diameter 9.3 mm. Discharging the capacitor bank through the coil 4 generates a magnetic field in the coil 4, which induces an opposing magnetic field in the nearby metal tube 1. The two opposing magnetic fields create a force which moves the metal tube 1 away from the coil 4, towards the ceramic tube 2 partly placed inside the metal tube 1. The metal tube 1 is deformed under high force and high speed, and forms a junction with the ceramic tube 2.

Before introducing the metal tube 1 and the ceramic tube 2 inside the magnetic coil 4 of the magnetic forming device, a soft, flexible layer of pure graphite foil 5 (foil thickness e.g. 0.1 mm) is introduced between the metal tube 1 and the ceramic tube 2 at the location where the junction has to be made. Graphite foil 5 can be used up to very high temperatures (far above the needed 350 °C) and is resistant to neutron bombardment. The graphite foil fills in microscopic scratches and imperfections in the ceramic tube 2 and/or in the metal tube 1, which scratches and imperfections, if not filled, can provide gas or water channels when the metal tube 1 is formed around the ceramic tube 2 by means of a high pressure forming operation. That way, a leak-tight junction is formed.

When the electrical conductivity of the metal tube 1 is not very high, as is the case for Ni or Pt, a thin helper tube or driver tube 6 with high electrical conductivity may be used, for example an Al driver tube, tightly fitted around the metal tube 1.

When the discharge current of the magnetic forming apparatus is directed through the magnetic coil 4, it creates a magnetic field. An opposing magnetic field is induced in the driver tube 6, and a force moves the driver tube 6 away from the magnetic coil 4, thus towards the centre line of the magnetic coil 4. The driver tube 6 presses the metal tube 1 with a high force and a high speed against the ceramic tube 2 at the location of the driver tube 6, a graphite foil being located between the metal tube 1 and the ceramic tube 2 before the magnetic forming operation has begun.

After the magnetic pulse being applied, the driver tube 6 is partly molten and can be pealed off easily by hand.

The use of a driver tube 6 has the additional advantage that the metal tube 1 is only compressed over the wanted region, which is the region of the junction.

Dimensions of examples of the different parts used are indicated in Table 1.

Table 1

| Part | inner diameter (mm) | outer diameter (mm) | wall thickness (mm) |
|---|---|---|---|
| Ceramic tube 2 | 1 | 4.6 | 1.8 |
| metal tube 1 | 5.1 | 6.1 | 0.5 |
| driver tube 6 | 6.1 | 6.5 | 0.2 |

It is to be noted that the gap between the ceramic tube 2 and the metal tube 1 (0.5 mm) is sufficient to insert the two layers of graphite foil. Keeping this gap small is advantageous, in the first place to reduce the impact force from the metal tube 1 onto the ceramic tube 2 and in the second place to avoid non-uniform wrinkling of the metal tube 1 after the magnetic pulse. Wrinkling is also counteracted by using a sufficient (e.g. 0.5 mm) wall thickness of the metal tube 1.

Experiments have been carried out, using a Nickel tube as the metal tube 1, and a zirconium oxide tube for the ceramic tube 2. The graphite foil 5 introduced between the metal tube 1 and the ceramic tube 2 had a thickness of 0.1 mm. A magnetic fast forming device Model SMU1500 (of Puls Plasmatechnik GmbH, Dortmund) as described above has been used for performing a magnetic forming operation. The results of the experiments are given hereafter.

For the experiments described hereafter, an energy of about 900 J was used, resulting in a typical coil current of 30 kA and a corresponding (maximum) magnetic pressure $P_M = B^2 / (2 \mu_0) = 156.6$ MPa (using $B = \mu_0 n I$ ; with $\mu_0$ the permeability of vacuum $4\pi$ $10^{-7}$ N $A^{-2}$; n = N/L, N being the number of coil turns, 20 for the apparatus used, and L being the coil length, 38 mm for the apparatus used). This energy is sufficiently high to obtain a leak-tight sealing and low enough to avoid fracturing of the ceramic tube 2. A signal output proportional to the current in the coil was recorded by means of a 200 MHz digital oscilloscope which was connected to a PC to store and analyse the wave forms. The frequency of the damped oscillation was typically 15 kHz. The skin depth can be calculated by :

$$\delta(mm) = \frac{50.33}{\sqrt{\sigma\left(\dfrac{1}{\mu\Omega\,cm}\right).\nu(Hz)}}$$

The skin depth of a substance is the distance to which incident electromagnetic radiation penetrates.

Values of the skin depth for a Nickel tube 1 and an Aluminium tube 6 are shown in Table 2. It is to be noted that the wall thickness is in both cases significantly smaller than the skin depth. This means that the electromagnetic radiation penetrates over the whole wall thickness of the Nickel tube 1 and of the Aluminium driver tube 6.

Table 2

| Part | skin depth (mm) at $\nu$=15 kHz | wall thickness (mm) |
|---|---|---|
| Nickel tube 1 | 1.08 | 0.5 |
| Aluminium tube 6 | 0.67 | 0.2 |

The current recorded in function of time in the magnetic coil 4 of the magnetic forming apparatus is shown in Fig. 2. Curve 10 shows the current measured in the coil 4 when no object is placed inside it, and curve 11 shows the current measured in the coil 4 when an object is placed inside it. It can be seen that the amplitude and the phase of the current is slightly modified by introducing an object inside the magnetic coil 4 of the magnetic forming apparatus.

The junction between the Nickel tube 1 and the ceramic tube 2 with a graphite foil 5 in between, was tested with water up to a pressure of 150 bar and a temperature of 250 °C. Even after several days, not a single drop of water was able to penetrate the transition. The procedure was found to be very reproducible.

Based on this procedure, a complete electrical feedthrough 28 has been designed, as shown in Fig. 3. A feedthrough is a device for transmitting electrical current, fluids or mechanical motion through the walls of a system. In the present case, electrical signals may be transmitted through a wall of a nuclear reactor by means of the feedthrough 28 of Fig. 3. The feedthrough 28 has a signal carrying wire 23 passing through. The feedthrough 28 may include two different types of metal 22, 24 which are in close proximity to each other and have to be joined and sealed to the same ceramic body 25 without the joining method of the one metal 22 interfering with the joint of the other metal 24 to the ceramic body 25. A cross-section through the feedthrough 28 in accordance with an embodiment of the present invention is shown schematically in Fig. 3.

It should be understood that the feedthrough 28 as represented in Fig. 3 is basically cylindrical. However, the cross-section may be any suitable one such as circular or polygonal, such as square, hexagonal or oval as required. It should also be understood that this embodiment will be used to describe particular aspects of the present invention but should not be considered limiting the invention. In particular, the methods and claimed teachings of the present invention may find application in a wide range of other sensors, probes, measuring electrodes, reference electrodes or feedthroughs known, for instance, per se from the following patents but without the novel and inventive features of the present invention: : US-4,965,041, US-5,192,414, US-5,217,596, US-5,118,913, US-4,636,292, US-4,948,492, US-5,571,394, and US-5,043,053.

In Fig. 3, 20 represents a metal sheath of a radiation resistant coaxial cable 21, e.g. as supplied by THERMOCOAX. The coaxial cable 21 may be, for instance, a mineral insulated cable having an inner conductor 23 of Inconel 600, an insulation of magnesium oxide and an outer sheath 20 of nickel or Inox 304 stainless steel. The metal sheath 20 of the coaxial cable 21 is connected at one end to a first metal cap 22, while the inner conductor 23 is welded to a second cap 24. The second metal cap 24 can e.g. be made out of Pt, resulting in a Pt electrode, suitable for electrochemical potential measurements. An insulating ceramic tube 25 with an internal bore is provided between the first metal cap 22 and the second metal cap 24, the inner conductor 23 being guided through the inner space of the ceramic tube 25 towards the second metal cap 24. The metal caps 22, 24 preferably have the same outer diameter as that of the ceramic tube 25. A leak-tight junction between, on the one hand, the first metal cap 22 and the ceramic tube 25, and, on the other hand, the second metal cap 24 and the ceramic tube 25 is provided according to the present invention by pressing a first metal tube 26 both on a part of the first metal cap 22 and on a portion of the ceramic tube 25, and by pressing a second metal tube 27 both on a portion of the second metal cap 24 and on a portion of the ceramic tube 25. In both cases, a graphite foil (not represented) is present between the metal tubes 26, 27 and the metal caps 22, 24, or the ceramic tube 25. The pressing is done by means of a high pressure forming operation, such as a magnetic forming operation of an explosive forming operation, with an adequate strength and speed to form the join.

In the probes, sensors, measuring electrodes, reference electrodes and feedthroughs making use of a leak-tight junction according to the present invention, it is preferred to use zirconium oxide as an insulating material where this material is in contact with cooling liquids of a nuclear reactor. For example zircon may be used, but zirconia is preferred. In particular the zirconium oxide is preferably at least partially stabilised (PSZ) but may also be fully stabilised. Suitable stabilisers are calcium, magnesium or yttrium (non-limiting list). Preferred metals preferably used for making the junction to the insulating material in the probes, sensors, measuring electrodes, reference electrodes and feedthroughs according to the present invention is nickel or a nickel alloy, platinum, niobium, zirconium or a zirconium alloy such as Zircalloy.

For insulating material and metals not in contact with the cooling fluid of the nuclear reactor less stringent requirements need to be met and therefore other materials may be used, e.g. alumina in one of its forms for the insulating material and stainless steel, Kovlar, Inconel, etc. for metal components.

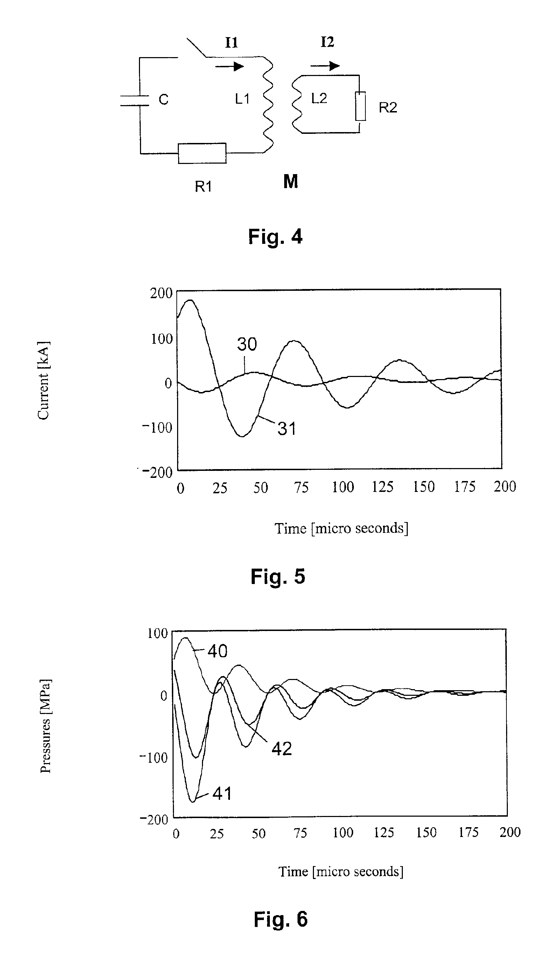

The magnetic forming process used for making the junction can be modelled by the equivalent circuit of Fig. 4. Here L1 is the inductance of the magnetic coil 4 and L2 is the self-inductance of the driver tube 6. R1 is the total (coil + external wires) resistance of the discharging circuit and R2 is the resistance of the driver tube 6. M is the mutual inductance between the magnetic coil 4 and the driver tube 6.

The equivalent circuit represented in Fig. 4 can be used to calculate the current I2 in the driver tube 6 and from this the pressure exerted by the driver tube 6 onto the work piece - being metal tube 1 - beneath. The following relations are obtained:

$$\frac{-Q(t)}{C} = L1 \cdot \frac{dI1}{dt} + R1 \cdot I1 + M \cdot \frac{dI2}{dt} \tag{1}$$

$$0 = R2 \cdot I2 + L2 \cdot \frac{dI2}{dt} + M \cdot \frac{dI1}{dt} \tag{2}$$

Differentiating (1) and (2) with respect to time gives:

$$-I1 = L1 \cdot \frac{d^2 I1}{dt^2} + R1 \cdot \frac{dI1}{dt} + M \cdot \frac{d^2 I2}{dt^2} \tag{3}$$

$$0 = R2 \cdot \frac{dI2}{dt} + L2 \cdot \frac{d^2 I2}{dt^2} + M \cdot \frac{d^2 I1}{dt^2} \tag{4}$$

Writing now I1 and I2 as

$$I_1 = I_{01} \cdot e^{j\omega t} \tag{5}$$

$$I_2 = I_{02} \cdot e^{j\omega t} \tag{6}$$

in which I1, I2, $I_{01}$ and $I_{02}$ are complex (containing the phase changes). Insertion into equations (3) and (4) results in:

$$-\omega^2 \cdot L1 \cdot I1 + i \cdot \omega \cdot R1 \cdot I1 + \frac{I1}{C} - \omega^2 \cdot M \cdot I2 = 0 \tag{7}$$

$$i \cdot \omega \cdot R2 \cdot I2 - \omega^2 \cdot L2 \cdot I2 - \omega^2 \cdot M \cdot I1 = 0 \tag{8}$$

Rewriting equation (8), the following equation is obtained:

$$I2 = \frac{\omega^2 \cdot M \bullet I1}{(i \cdot \omega \cdot R2 - \omega^2 \cdot L2)} \tag{9}$$

When inserting equation (9) into equation (7), a third order equation for $\omega$ is obtained:

$$(L2 \cdot L1 - M^2) \cdot \omega^3 - i \cdot (R2 \cdot L1 + R1 \cdot L2) \cdot \omega^2 - \left( R2 \cdot R1 + \frac{L2}{C} \right) \cdot \omega + i \cdot \frac{R2}{C} = 0 \tag{10}$$

This equation can be solved numerically (using for instance MATHCAD). The difficulty lies in determining the parameters R1, R2, L1, L2 and M.
In case of an empty magnetic coil (no work piece nor driver tube present inside the magnetic coil), the expression for $\omega$ is known:

$$\omega = \frac{i \cdot R1 \pm \sqrt{-R1^2 + 4 \cdot \frac{L1}{C}}}{2 \cdot L1} \tag{11}$$

This means that the current I1 decays as

$$I1 \approx e^{-\frac{R1}{2 \cdot L1}} \tag{12}$$

As C is known, one can fit the experimentally observed current trace I1 (curve 10 of Fig. 2) to obtain R1 and L1.
In case of a magnetic coil 4 with a driver tube 6 and a work piece, metal tube 1, in it, the following is obtained. M will be written as:

$$M = k \cdot \sqrt{L1 \cdot L2} \tag{13}$$

in which k is a dimensionless coupling constant, which is always smaller than one; L1 is the inductance of the magnetic coil; and L2 is the self-inductance of the driver tube. The emf (electromotive force) in the driver tube is given by

$$V_2 = -S_2 \cdot \frac{dB}{dt} \tag{14}$$

in which $S_2$ is the inner cross-sectional area of the driver tube and B is the magnetic field induced by the external coil of the magnetic forming apparatus:

$$B = \mu_0 \cdot \frac{N1 \cdot I_1}{Lcoil} \tag{15}$$

It is also known that

$$V_2 = M \cdot \frac{dI_1}{dt} \tag{16}$$

When combining equations (14), (15) and (16), it is found that

$$M = \mu_0 \cdot S_2 \cdot \frac{N1}{Lcoil} \tag{17}$$

The inductance of a long solenoid (external magnetic coil) is given by

$$L1 = \mu_0 \cdot \frac{Nc^2}{Lcoil} \cdot r_1^2 \cdot \pi \tag{18}$$

Assuming further that the inductance of the driver tube is given by the equation for a solenoid with n=1, it is found that

$$L2 = \frac{\mu_0 \cdot r_2^2 \cdot \pi}{Ld} \tag{19}$$

in which $r_2$ is the radius and Ld the length of the driver tube.
Combining equations (13), (18) and (19), it is found that

$$k = \frac{r_2}{r_1} \cdot \sqrt{\frac{Ld}{Lcoil}} \tag{20}$$

If the wall thickness (t) of the driver tube is significantly smaller than the skin depth, one can approximate R2 by

$$R2 = \frac{\rho \cdot 2 \cdot \pi \cdot r_2}{t \cdot Ld} \tag{21}$$

in which $\rho$ is the resistivity.
All the parameters to calculate I2 are now known, and this results in:

$$I2 = \frac{\omega^2 \cdot M \bullet I1}{(i \cdot \omega \cdot R2 - \omega^2 \cdot L2)} \tag{22}$$

Finally, the induced pressure (real part) on the driver tube can be computed from the Lorentz force (F = I x B x Length) ;

$$Re(P1(Pa)) = \mu_0 \cdot N1 \cdot \frac{Re(I1) \cdot Re(I2)}{Lcoil \cdot Ld} \tag{23}$$

It is to be noted that this result can also be obtained in a completely different way : the total energy of the coupled coil system is given by

$$U = \frac{1}{2} \cdot L1 \cdot I1^2 + \frac{1}{2} \cdot L2 \cdot I2^2 + M \cdot I1 \cdot I2 \tag{24}$$

Using then the principle of virtual work, the force between the two coils is obtained as follows:

$$F = I1 \cdot I2 \cdot \frac{dM}{dr} + \frac{1}{2} \cdot I2^2 \cdot \frac{dL2}{dr} \qquad (25)$$

Using the expression for M (equation 17) and dividing the left term of the force by the surface, equation (23) is obtained again.

The second (right) term in equation (25) corresponds to the tendency of a current loop to expand, the so-called hoop force. A circular loop of wire bulges outward from the "hoop force" when similarly energised, because current flows in opposite directions in facing segments, causing their mutual repulsion. This force exists for instance also on tokamaks where the tendency of the toroidal tokamak plasma current to expand is counteracted by the so-called vertical magnetic field coils. Using the expression for L2 (equation 19), and dividing again by the surface, the resulting real part of the pressure P2 is obtained;

$$\mathrm{Re}(P2(Pa)) = \frac{\mu_0 \cdot (\mathrm{Re}(I2))^2}{2 \cdot Ld^2} \qquad (26)$$

and the total pressure is Ptot = P1 + P2.

It is to be noted that this total pressure Ptot is in general smaller than the (maximum) magnetic pressure induced by the coil

$$P_{max} = \frac{B^2}{2 \cdot \mu_0} \qquad (27)$$

This is due to the fact that part of the field is able to penetrate through the thin driver tube, causing a (smaller) opposite pressure on the inside of the driver tube.

The induced pressure (Ptot) then has to be compared with the pressure required to plastically deform the work piece (metal tube 1 underneath the driver tube 6)

$$P(plastic) = \frac{Ys \cdot t}{rwork} \qquad (28)$$

whereby Ys is the yield strength and rwork is the radius of the work piece. The induced pressure Ptot must be larger than the pressure required to plastically deform the work piece.

An example calculation has been made for a Nickel tube. Fig. 5 shows the calculated currents I1 (curve 30) and I2 (curve 31). It is to be noted that the induced current (12) in the driver tube is significantly larger than the current (I1) in the external magnetic coil.

Fig. 6 shows the calculated pressures P1 (curve 40), P2 (curve 41) and Ptot (curve 42). It is to be noted that the pressure P2 and the total pressure Ptot periodically change sign. Thus sometimes the pressure is outward (though small) !

While the invention has been shown and described with reference to preferred embodiments, it will be understood by those skilled in the art that various changes or modifications in form and detail, in configurations and materials, may be made without departing from the scope and spirit of this invention. In particular other high pressure forming operations may be used to obtain the leak-tight junction. The graphite layer is applied above in the form of a graphite foil. However, the present invention includes any suitable application of a graphite layer, e.g. by compressing graphite powder onto the surface to be joined using a high pressure forming technique such as hydroforming.

**Claims**

1. A method for producing a junction between a first material and a second, plastically deformable, comprising the steps of:

applying a graphite layer between a surface portion of the first material and a surface portion of the second material where the junction is to be made, and plastically deforming said second material against said first material at the location of the junction to be made by means of a high pressure forming operation to produce a sealed junction between the first material and the second material.

2. A method according to claim 1, **characterised in that** the step of deforming the second material is done by means of a magnetic forming operation.

3. A method according to claim 1, **characterised in that** the step of deforming the second material is done by means of an explosive forming operation.

4. A method according to any of the previous claims, **characterised in that** the first material is ceramic material or a metal material.

5. A method according to any of the previous claims, **characterised in that** the second material is metal material.

6. A method according to any of the previous claims, **characterised in that** the first and second material and the graphite layer are concentric to each other.

7. The method according to any previous claim wherein the application of the graphite layer comprises applying a graphite foil.

8. A leak-tight junction between a first material and a second, plastically deformable, material, **characterised in that** it comprises a graphite layer sealingly compressed between the first material and the second material.

9. A leak-tight junction according to claim 8, **characterised in that** the first material is a ceramic material.

10. A leak-tight junction according to claim 9, **characterised in that** the ceramic material is made of zirconium oxide, or stabilised or partly-stabilised zirconium oxide.

11. A leak-tight junction according to any of claims 8 to 10, **characterised in that** the first material is a metal material.

12. A leak-tight junction according to claim 11, **characterised in that** the first metal material is selected from zirconium, a zirconium alloy, niobium, a niobium alloy, zirconium, a zirconium alloy, stainless steel.

13. A leak-tight junction according to any of claims 8 to 11, **characterised in that** the second material is a metal material.

14. A leak-tight junction according to claim 13, **characterised in that** the second metal material is nickel, a nickel alloy, platinum, niobium, a niobium alloy, zirconium or a zirconium alloy.

15. A leak-tight junction according to any of claims 8 to 14, **characterised in that** the first material and the second material have the same coefficient of expansion.

16. A leak-tight junction according to any of claims 8 to 15, **characterised in that** the graphite layer is a graphite foil with a purity grade of at least 98%.

17. A leak-tight junction according to any of claims 8 to 16, **characterised in that** it is furthermore radiation resistant.

18. A leak-tight device, in particular a probe, a sensor, a measuring electrode, a reference electrode or a feedthrough for use in a high temperature environment, **characterised in that** it comprises a leak-tight junction according to any of claims 8 to 18.

**Fig. 1**

**Fig. 2**

**Fig. 3**

**Fig. 4**

Current [kA]

Time [micro seconds]

**Fig. 5**

Pressures [MPa]

Time [micro seconds]

**Fig. 6**

## EUROPEAN SEARCH REPORT

European Patent Office

Application Number

EP 01 20 0444

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | GB 1 060 528 A (SIEMENS-SCHUCKERTWERKE AG) 1 March 1967 (1967-03-01) * page 1, line 36 - line 42; claims 1-7 * --- | 1-18 | C04B37/02 F16B11/00 B29C65/00 |
| A | DE 33 35 335 A (THE CLARK-RELIANCE CORP.) 29 March 1984 (1984-03-29) * claims 1-6; figure 1 * ----- | 1-18 | |

TECHNICAL FIELDS SEARCHED (Int.Cl.7)

C04B
F16B
B29C

The present search report has been drawn up for all claims

| Place of search | Date of completion of the search | Examiner |
|---|---|---|
| THE HAGUE | 13 June 2001 | Hauck, H |

**ANNEX TO THE EUROPEAN SEARCH REPORT
ON EUROPEAN PATENT APPLICATION NO.**          EP 01 20 0444

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2001

| Patent document cited in search report | | Publication date | Patent family member(s) | | Publication date |
|---|---|---|---|---|---|
| GB 1060528 | A | 01-03-1967 | CH | 475832 A | 31-07-1969 |
| | | | JP | 51001729 B | 20-01-1976 |
| | | | US | 3674586 A | 04-07-1972 |
| DE 3335335 | A | 29-03-1984 | US | 4507521 A | 26-03-1985 |
| | | | CA | 1200283 A | 04-02-1986 |
| | | | GB | 2127976 A,B | 18-04-1984 |
| | | | JP | 1804525 C | 26-11-1993 |
| | | | JP | 5001402 B | 08-01-1993 |
| | | | JP | 59084116 A | 15-05-1984 |
| | | | ZA | 8306644 A | 31-10-1984 |

EPO FORM P0459

For more details about this annex : see Official Journal of the European Patent Office, No. 12/82